# EUROPEAN PATENT SPECIFICATION

(11) **EP 4 151 470 B1**
(45) Date of publication and mention of the grant of the patent: **06.11.2024**
(21) Application number: 21197345.8
(22) Date of filing: 17.09.2021
(51) Int. Cl.: B60R 19/18

(54) **BUMPER BEAM ARRANGEMENT**
STOSSSTANGENTRÄGERANORDNUNG
AGENCEMENT DE POUTRE DE PARE-CHOCS

(43) Date of publication of application: 22.03.2023
(73) Proprietor: AUTOTECH ENGINEERING S.L., 48340 Amorebieta-Etxano, Bizkaia (ES)
(72) Inventor: HÄGGSTRÖM, Tony, 945 34 Rosvik (SE); LUNDHOLM, Erik, 97433 Luleå (SE)
(74) Representative: Ehrner & Delmar Patentbyrå AB

(56) References cited:
- EP-A1- 1 723 008
- EP-B1- 1 723 008
- WO-A1-2004/108482
- WO-A2-2006/012223
- DE-A1- 102010 050 013

## Description

### TECHNICAL AREA

The present application relates to a bumper beam arrangement for a vehicle.

### BACKGROUND OF INVENTION

Different aspects need to be taken into consideration when developing a bumper for a vehicle. One important aspect is the handling of impacts from crashes into objects. Higher and higher demands are put on the ability to deform in controlled manner and also to handle energy absorption during impact. On the other hand, higher demands are also put on weight reduction of vehicles for improved fuel economy, which might negatively affect the possibility to handle impacts in an effective way.

During recent years, so called advanced high strength steels (AHSS), have been developed that display excellent strength, ductility, toughness and fatigue properties that now are widely used in vehicles for increasing functional performance of certain parts. These types of steel are often used in bumper beam arrangements for vehicles where often the beam has a hat-shaped profile as seen in cross-section and with a cover plate covering the open part of the beam, forming a closed structure, in turn providing a torsional stiff bumper arrangement. Usually, the beam is made of AHSS while the cover plate can be made of a steel quality of lesser strength and also lesser thickness, while providing the desired functionality.

For some vehicle models, the design of the vehicle is such that the above mentioned type of bumper arrangement cannot be used due to for instance design space close to the white body and attachment holes where such an arrangement would reduce the beam height and therefore the performance of the bumper arrangement. Thus, alternative designs of the bumper arrangement are required.

One alternative design of the hat-shaped beam with a cover plate is disclosed in EP 1 723 008. The disclosed bumper beam comprises an elongated outer beam or profile. The outer beam has a central flange and webs with side flanges. The outer beam has a central curved section and two outer, generally planar, sections. The bumper further comprises a cover plate intended to be closest to the vehicle, which cover plate should be substantially linear. The cover plate is provided with two outer sections that are generally flat and planar. A central section is arranged between the outer sections, where the central section is provided with two webs, the height of which gradually increases with an arc-shape from the outer sections to the centre of the beam, generally corresponding to the curved central section of the outer beam. The side flanges of the webs of both components are then welded together.

The design provides an increased height or extension of the bumper in the central section of the bumper. Further, in contrast to the design first mentioned, here the beam is the outermost component and the cover plate is closer to the vehicle. Moreover, in contrast to the previous design, the cover plate on the inside is intended to take the tension load if a central section of the beam hits a lamp post or the like single object, which should reduce the risk of the outer profile collapsing. If the cover plate was not to take up the tension load, the outer profile might tend to straighten out and bend crash boxes to which the beam is attached, whereby they would not be able to take up energy as intended.

### BRIEF DESCRIPTION OF INVENTION

The aim of the present application is to provide an improved bumper arrangement capable of handling design aspects with maintained functionality. The aim is solved by a bumper arrangement according to the independent claim. Preferable embodiments form the subject of the dependent claims.

According to one aspect, a bumper beam arrangement for a vehicle is provided, that may comprise an elongated beam having a central flange and webs on each side of the central flange, wherein the webs at a central section of the beam have a first extension, the webs at outer sections of the beam have a second extension, wherein the second extension is less than the first extension, the extension of the webs gradually decreasing between the central section and the outer sections.

The bumper beam arrangement may further comprise an elongated cover plate attached to said beam, having a central flange and webs on each side of the central flange, wherein the webs of the cover plate have extension profiles that correspond to the webs of the beam, such that the beam arrangement obtains a generally uniform thickness along its length. With this solution, a bumper beam arrangement is provided that at the central section has the appearance of a traditional solution that outwards transitions to a design close to the attachment areas such as crash boxes where the cover plate becomes the traditional beam and the beam more like a cover plate.

According to a further aspect, the central section in which the webs have generally a uniform extension. In relation to this, a central section of the central flange of the cover plate may be generally planar and not provided with webs.

Moreover, the beam may be arranged with outer sections, in which sections the webs have generally a uniform extension. The beam is preferably manufactured from advanced high strength steels (AHSS).

These and other aspects of, and advantages with, the present invention will become apparent from the following detailed description of the invention and from the accompanying drawings.

### BRIEF DESCRIPTION OF DRAWINGS

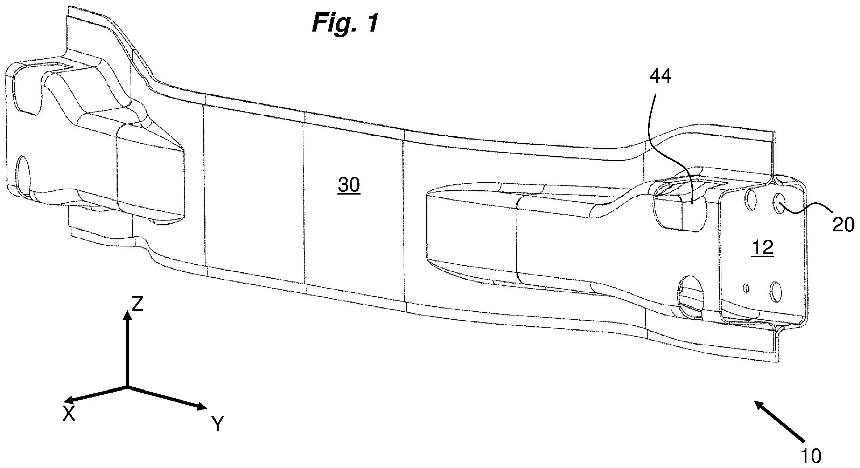

In the following detailed description of the invention, reference will be made to the accompanying drawings, of which
Fig. 1 shows a frontal perspective view of a bumper arrangement according to one aspect of the invention, and
Fig. 2 shows a side perspective view of the bumper arrangement of Fig. 1.

### DETAILED DESCRIPTION OF THE INVENTION

The figures show an example of a bumper beam arrangement 10 to be attached to a white body of a vehicle. The bumper arrangement comprises an elongated beam 12 having a central flange 14 and two webs 16 generally perpendicular the bottom. The webs 16 are provided with outwardly directed side flanges 18. The beam shown is somewhat curved but may of course be straight. The beam is further arranged with holes 20 for attachment to a white body of a vehicle, either directly or via crash boxes (not shown).

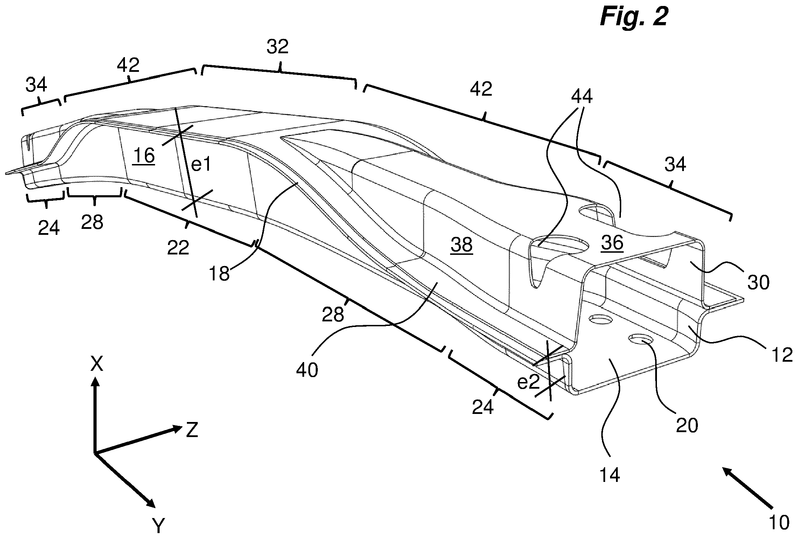

The beam has a central section 22, Fig. 2, where the webs 16 have a substantial extension e1 as seen in the X-direction. The beam further has two outer sections 24 where the attachment holes 20 are situated, which outer sections 24 have webs 16 that are formed with much lesser extension e2 as seen in the X-direction. Between the central section 22 and the outer sections 24, transitional sections 28 are arranged, where the extension of the webs gradually decreases in the X-direction as seen in directions from the central section 22 towards the outer sections 24.

Further, the bumper beam arrangement 10 is arranged with an elongated cover plate 30 that is attached to the beam 12 for covering the open side of the beam and has generally the same length as the beam 12. As seen in the figure, the cover plate 30 has a central section 32 designed to cover the central part of the beam. The central section 32 of the cover plate 30 is generally flat. The cover plate 30 also has outer sections 34 for covering the outer sections of the beam. The outer sections 34 of the cover plate 30 are arranged with a generally flat mid-section 36 and webs 38 on each side of the mid-section 36. The ends of the webs 38 are arranged with outwardly directed side flanges 40 that are designed to rest on and be attached to the side flanges 18 of the beam 12.

The cover plate is further arranged with transition sections 42 between the central section 32 and the outer sections 34. The transition sections 42 are also arranged with generally flat mid-sections 36 and webs 38 with outwardly directed flanges 40, but the extension of the webs 38 gradually increase as seen in directions from the central section 32 towards the outer section 34, following the transition curve of the flanges 18 of the beam 12 so that the side flanges 40 of the transition sections 42 of the cover plate 30 are in contact with the side flanges 18 of the transition sections 28 of the beam 12. The bumper beam arrangement 10 as shown will thus have a generally uniform thickness in the X-direction throughout the length of the bumper arrangement. The outer sections 34 of the cover plate 30 are further arranged with passages 44 to provide access to the holes 20 in the beam 12 for the attachment of the bumper beam arrangement 10 to a vehicle. In this regard, the outer sections 34 of the cover plate 30 may be made a bit wider, i.e. the mid-section 36 is somewhat broader so that the passages 44 of the cover plate 30 are only placed in the mid-section 36, and not cutting into the webs 38 of the cover plate 30 as shown.

The beam 12 is preferably made of AHSS-steel in order to handle impacts in a very sufficient way. For example, the beam may be roll-formed. The cover plate 30 may be made of AHSS-steel but may also be made of steel grades with lesser strength. The cover plate may have the same thickness as the beam, but as seen in Fig. 2, the thickness of the cover plate may also be less than the thickness of the beam 12. One important aspect is that the cover plate 30 provides the necessary torsion stiffness and wherein the outer sections 34 and somewhat the transition sections 42 of the cover plate 30 take over the function of the beam 12 in some sense.

It is to be understood that the embodiment described above and shown in the drawings is to be regarded only as a non-limiting example of the invention and that it may be modified in many ways within the scope of the claims.

## Claims

1. A bumper beam arrangement (10) for a vehicle, comprising an elongated beam (12) having a central flange (14) and webs (16) on each side of the central flange (14), wherein the webs (16) of the elongated beam (12) at a central section (22) of the elongated beam (12) with regard to the length of the elongated beam (12) have a first extension (e1), wherein the webs (16) of the elongated beam (12) at outer sections (24) of the elongated beam (12) with regard to the length of the elongated beam (12) have a second extension (e2), wherein the second extension (e2) is less than the first extension (e1), the extension of the webs (16) of the elongated beam (12) gradually decreasing between the central section (22) of the elongated beam (12) and the outer sections (24) of the elongated beam (12), wherein the bumper beam arrangement (10) further comprises an elongated cover plate (30) attached to said elongated beam (12), wherein the elongated cover plate (30) has a central flange and webs (38) on each side of the central flange of the elongated cover plate (30), wherein the webs (38) of the elongated cover plate (30) have extension profiles that correspond to the webs (16) of the elongated beam (12) such that the beam arrangement (10) obtains a uniform thickness along its length, wherein the outer sections (24) of the elongated beam (12) have attachment passages (20), and wherein outer sections (34) of the elongated cover plate (30) have passages (44) for providing access to the attachment passages (20) of the elongated beam (12) and for enabling the attachment of the bumper beam arrangement (10) to a body of a vehicle.

2. A bumper beam arrangement (10) according to claim 1, wherein the webs (16) of the central section (22) of the elongated beam (12) have a uniform extension.

3. A bumper beam arrangement (10) according to claim 1 or 2, wherein a central section (32) of the central flange of the elongated cover plate (30) is planar and not provided with webs.

4. A bumper beam arrangement (10) according to claim 1, wherein the webs (16) of the outer sections (24) of the elongated beam (12) have a uniform extension.

5. A bumper beam arrangement (10) according to any of the preceding claims, wherein the elongated beam (12) is manufactured from advanced high strength steels, AHSS.

## Patentansprüche

1. Stoßstangenträgeranordnung (10) für ein Fahrzeug, umfassend einen länglichen Träger (12) mit einem mittleren Flansch (14) und Stegen (16) an jeder Seite des mittleren Flanschs (14), wobei die Stege (16) des länglichen Trägers (12) an einem mittleren Abschnitt (22) des länglichen Trägers (12) bezüglich der Länge des länglichen Trägers (12) eine erste Erstreckung (e1) haben, wobei die Stege (16) des länglichen Trägers (12) an äußeren Abschnitten (24) des länglichen Trägers (12) bezüglich der Länge des länglichen Trägers (12) eine zweite Erstreckung (e2) haben, wobei die zweite Erstreckung (e2) geringer als die erste Erstreckung (e1) ist, wobei die Erstreckung der Stege (16) des länglichen Trägers (12) zwischen dem mittleren Abschnitt (22) des länglichen Trägers (12) und den äußeren Abschnitten (24) des länglichen Trägers (12) allmählich abnimmt, wobei die Stoßstangenträgeranordnung (10) ferner eine an dem länglichen Träger (12) angebrachte längliche Abdeckplatte (30) umfasst, wobei die längliche Abdeckplatte (30) einen mittleren Flansch und Stege (38) an jeder Seite des mittleren Flanschs der länglichen Abdeckplatte (30) hat, wobei die Stege (38) der länglichen Abdeckplatte (30) Erstreckungsprofile haben, die den Stegen (16) des länglichen Trägers (12) entsprechen, so dass die Trägeranordnung (10) eine einheitliche Dicke entlang ihrer Länge erhält, wobei die äußeren Abschnitte (24) des länglichen Trägers (12) Anbringdurchgänge (20) haben und wobei die äußeren Abschnitte (34) der länglichen Abdeckplatte (20) Durchgänge (44) haben, um für Zugang zu den Anbringdurchgängen (20) des länglichen Trägers (12) zu sorgen und um das Anbringen der Stoßstangenträgeranordnung (10) an einem Aufbau eines Fahrzeugs zu ermöglichen.

2. Stoßstangenträgeranordnung (10) nach Anspruch 1, wobei die Stege (16) des mittleren Abschnitts (22) des länglichen Trägers (12) eine einheitliche Erstreckung haben.

3. Stoßstangenträgeranordnung (10) nach Anspruch 1 oder 2, wobei ein mittlerer Abschnitt (32) des mittleren Flanschs der länglichen Abdeckplatte (30) planar ist und nicht mit Stegen versehen ist.

4. Stoßstangenträgeranordnung (10) nach Anspruch 1, wobei die Stege (16) der äußeren Abschnitte (24) des länglichen Trägers (12) eine einheitliche Erstreckung haben.

5. Stoßstangenträgeranordnung (10) nach einem der vorhergehenden Ansprüche, wobei der längliche Träger (12) aus AHSS-Stählen (AHSS - Advanced High Strength Steel) hergestellt ist.

## Revendications

1. Agencement formant poutre de pare-chocs (10) pour un véhicule, comprenant une poutre allongée (12) ayant une semelle centrale (14) et des âmes (16) de chaque côté de la semelle centrale (14), les âmes (16) de la poutre allongée (12) au niveau d'une section centrale (22) de la poutre allongée (12) par rapport à la longueur de la poutre allongée (12) ayant une première extension (e1), les âmes de la poutre allongée (12) au niveau de sections externes (24) de la poutre allongée (12) par rapport à la longueur de la poutre allongée (12) ayant une deuxième extension (e2), la deuxième extension (e2) étant inférieure à la première extension (e1), l'extension des âmes (16) de la poutre allongée (12) diminuant progressivement entre la section centrale (22) de la poutre allongée (12) et les sections externes (24) de la poutre allongée (12), l'agencement formant poutre de pare-chocs (10) comprenant en outre une plaque de recouvrement allongée (30) fixée à ladite poutre allongée (12), la plaque de recouvrement allongée (30) ayant une semelle centrale et des âmes (38) de chaque côté de la semelle centrale de la plaque de recouvrement allongée (30), les âmes (38) de la plaque de recouvrement allongée (30) ayant des profils d'extension qui correspondent aux âmes (16) de la poutre allongée (12) de sorte que l'agencement formant poutre (10) obtient une épaisseur uniforme le long de sa longueur, les sections externes (24) de la poutre allongée (12) ayant des passages de fixation (20), et des sections externes (34) de la plaque de recouvrement allongée (30) ayant des passages (44) pour fournir un accès aux passages de fixation (20) de la poutre allongée (12) et pour permettre la fixation de l'agencement formant poutre de pare-chocs (10) à une carrosserie d'un véhicule.

2. Agencement formant poutre de pare-chocs (10) selon la revendication 1, les âmes (16) de la section centrale (22) de la poutre allongée (12) ayant une extension uniforme.

3. Agencement formant poutre de pare-chocs (10) selon la revendication 1 ou 2, une section centrale (32) de la semelle centrale de la plaque de recouvrement allongée (30) étant plane et n'étant pas pourvue d'âmes.

4. Agencement formant poutre de pare-chocs (10) selon la revendication 1, les âmes (16) des sections externes (24) de la poutre allongée (12) ayant une extension uniforme.

5. Agencement formant poutre de pare-chocs (10) selon l'une quelconque des revendications précédentes, la poutre allongée (12) étant fabriquée à partir d'aciers avancés à haute résistance, AHSS.
